(19) Europäisches Patentamt
European Patent Office
Office européen des brevets

(11) Veröffentlichungsnummer: **0 017 894**
**B1**

(12) **EUROPÄISCHE PATENTSCHRIFT**

(45) Veröffentlichungstag der Patentschrift: **04.07.84**

(21) Anmeldenummer: **80101858.1**

(22) Anmeldetag: **08.04.80**

(51) Int. Cl.³: **C 08 G 59/64**, C 09 D 3/58, C 25 D 13/06

(54) **Verwendung von Polyadditionsprodukten aus Ammoniak und Epoxidverbindungen für die kathodische Elektrotauchlackierung.**

(30) Priorität: **09.04.79 DE 2914297**

(43) Veröffentlichungstag der Anmeldung:
**29.10.80 Patentblatt 80/22**

(45) Bekanntmachung des Hinweises auf die Patenterteilung:
**04.07.84 Patentblatt 84/27**

(84) Benannte Vertragsstaaten:
**AT BE CH DE FR GB IT LI NL SE**

(56) Entgegenhaltungen:
**DE - A - 1 495 537**
**DE - A - 1 947 879**
**US - A - 3 716 402**

(73) Patentinhaber: **BASF Aktiengesellschaft**
**Carl-Bosch-Strasse 38**
**D-6700 Ludwigshafen (DE)**

(72) Erfinder: **Kempter, Fritz Erdmann, Dr.**
**L 2,14**
**D-6800 Mannheim (DE)**
Erfinder: **Schupp, Eberhard, Dr.**
**Tilsiter Weg 4**
**D-6830 Schwetzingen (DE)**
Erfinder: **Schenck, Hans-Uwe, Dr.**
**Erlenweg 6**
**D-6706 Wachenheim (DE)**
Erfinder: **Gulbins, Erich, Dr.**
**Ladenburger Strasse 80**
**D-6900 Heidelberg-Neuenheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 017 894 B1

**Beschreibung**

Die vorliegende Erfindung betrifft die Verwendung von Polyadditionsprodukten aus Ammoniak und Epoxidverbindungen in protonierter Form als Bindemittel für die kathodische Elektrotauchlackierung metallischer Gegenstände.

Oberflächenbeschichtungsmittel für das Verfahren der kathodischen Elektrotauchlackierung auf der Basis von Reaktionsprodukten von Poly-(Di-)-Epoxiden mit primären und/oder sekundären Aminen sind seit langem bekannt und werden nach den verschiedensten Modifizierungsverfahren zur Herstellung von kathodisch abscheidbaren Elektrotauchlacken eingesetzt.

Im Gegensatz zur Umsetzung von Di- oder Polyepoxidverbindungen mit primären oder sekundären Aminen fand die Reaktion mit Ammoniak im Zusammenhang mit Bindemitteln für die Elektrotauchlackierung bisher keine Erwähnung.

Bezüglich der Reaktion zwischen Polyepoxiden und Ammoniak selbst lassen sich in der Literatur auch nur wenige Hinweise finden.

In der DE—OS 14 95 537 wird z.B. die Umsetzung von Epoxiden in Anwesenheit von Emulgatoren und/oder Schutzkolloiden mit Ammoniak beschrieben.

Die JA—PS 026 341 bezieht sich auf die Umsetzung von Epoxiden mit wässrigem Ammoniak in acetonischer Lösung unter Bildung von 1,4-Bis (2-hydroxy-3-aminopropoxy)-benzol mit einem Smp. von 128 bis 132°C.

Nach der US—PS 19 47 879 werden ebenfalls Di-primäre-Aminoverbindungen der folgenden Formel erhalten.

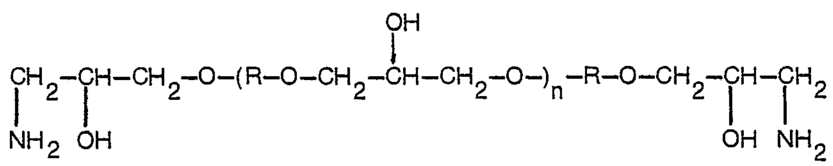

Die Produkte sollen gemäß dieser US—PS als Epoxidharz-Härtungsmittel verwendet werden.

In allen diesen Fällen handelt es sich um Produkte mit ausschließlich primären Aminogruppen.

Zu diesen Produkten kommt man, wenn die Umsetzung von Di-epoxiden mit einem extremen Überschuß an Ammoniak durchgeführt wird. Die bereits zitierte US—PS 19 47 879 nennt z.B. einen Überschuß von 25 bis 50 Mol $NH_3$ bezogen auf eine Epoxid-Gruppe.

In der US—PS 3 716 402 werden Umsetzungsprodukte von Epoxidharzen mit primären Aminen beschrieben. Als primäres Amin wird hier zwar auch Ammoniak genannt, doch soll hier pro Mol Amin jeweils 1 Äquivalent Epoxid vorhanden sein, was zu einer Vernetzung des Ansatzes bei Verwendung von Ammoniak als Amin führt.

Aufgabe der vorliegenden Erfindung ist es, neue Polyadditionsprodukte aufzuzeigen, die sich aus einfachen Einsatzstoffen herstellen und vorteilhaft für die kathodische Elektrotauchlackierung verwenden lassen.

Überraschenderweise wurde nun gefunde, daß bei Durchführung der Reaktion von Poly-(Di-)-Epoxiden mit geringeren Mengen Ammoniak stickstoffhaltige Oligomere bzw. Polymere mit niedrigen Molekulargewichten erhalten werden, die entweder direkt als kathodisch abscheidbare Bindemittel eingesetzt werden oder aber als Ausgangsprodukte zur Herstellung kathodisch abscheidbarer Bindemittel verwendet werden können.

Gegenstand der vorliegenden Erfindung ist die Verwendung von mit einer Säure zumindest teilweise protonierten epoxidgruppenfreien Reaktionsprodukten aus Ammoniak und Di-, Tri- und/oder Tetraepoxidverbindungen, wobei zur Herstellung dieser Reaktionsprodukte jeweils auf eine Epoxidgruppe 1,75 bis 10 Mole Ammoniak eingesetzt und jeweils 1 Mol Ammoniak mit 1,2 bis 2,0 Äquivalenten Epoxid umgesetzt worden ist, so daß bei Verwendung von Diepoxidverbindungen Produkte der allgemeinen Formel (I)

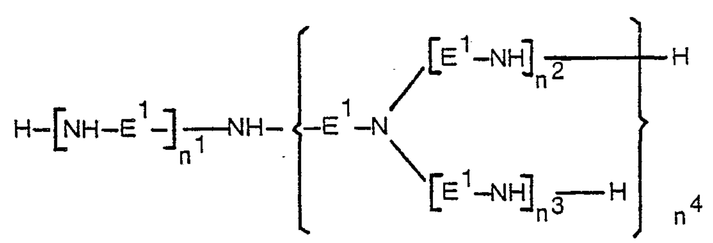

(I)

und bei (Mit-)verwendung von Tri- und/oder Tetraepoxidverbindungen solche der allgemeinen Formel (II)

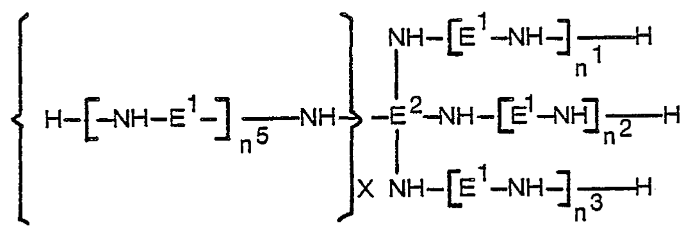

(II)

entstehen, worin $E^1$ gleiche oder verschiedene hydroxylgruppenhaltige zweiwertige und $E^2$ gleiche oder verschiedene hydroxylgruppenhaltige drei- oder vierwertige Reste sind, wie sie durch Ringöffnung der Oxiranringe von Epoxidverbindungen mit zwei, drei oder vier Epoxidgruppen im Molekül erhältlich sind, und $n^1$, $n^3$ und $n^5$ für 0 bis 3, $n^2$ und $n^4$ für 1 bis 3 und X für 0 oder 1 stehen, wobei gegebenenfalls ein oder mehrere der zweiwertigen Reste $E^1$ in der allgemeinen Formel (II) durch mehrwertige Reste $E^2$ ersetzt sein können, für die kathodische Elektrotauchlackierung metallischer Gegenstände.

Die erfindungsgemäß zu verwendenden Polyadditionsprodukte lassen sich durch Umsetzung mit Aldehyden, Monoepoxidverbindungen, Carbonsäuren und/oder Carbonsäureestern abwandeln oder mit Vernetzungsmitteln kombinieren und in protonierter Form als Bindemittel für die kathodische Elektrotauchlackierung metallischer Gegenstände verwenden.

Als Epoxidverbindungen kommen für die Herstellung der erfindungsgemäßen Polyadditionsprodukte Epoxidverbindungen mit 2, 3 oder 4 Epoxidgruppen im Molekül in Betracht, beispielsweise Umsetzungsprodukte von mehrwertigen Phenolen, besonders solchen der Formel

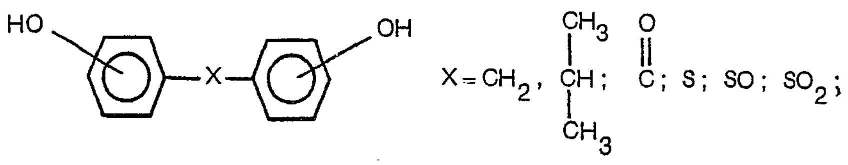

mit Epichlorhydrin. Andere Phenole sind z.B. Bis-(4-hydroxy-tert.-butylphenyl)-2-2-propan, Bis(2-hydroxynaphthyl)-methan und 1,5-Dihydroxynaphthalin oder "dimere" und Phenoladdukte des Cardanols (z.B. 3-(8,11)Pentadecadienyl-)-phenol). Aber auch die Reaktionsprodukte von mehrwertigen Alkoholen wie z.B. Äthylenglykol, Diäthylenglykol, Propylenglykole, Bis-(4-hydroxycyclohexyl)-2,2-propan, Pentaerythrit, Dipentaerythrit, Trimethylolpropan, Hexantriol oder Glycerin sowie Sorbit mit Epichlorhydrin sind hierfür geeignet. Andere geeignete Epoxidverbindungen sind epoxidierte Oligo-oder Polybutadiene bzw. Isoprene, weiterhin Produkte, die epoxidierte Cyclohexenreste enthalten sowie Epoxidharze aus 1,1-Methylen-bis-(5-substituiertem) Hydantoin nach der US—PS 3 891 097, Diepoxide aus Bisimiden nach der US—PS 3 450 711, stickstoffhaltige Diepoxide nach der US—PS 3 365 471, 1,3,5-Triglycidylisocyanurat oder epoxidierte Aminomethyldiphenyloxide nach der US—PS 33 12 664.

Weitere geeignete Epoxidharze sind die bekannten, geblockte Isocyanatgruppen enthal-tenden Produkte auf der Basis von Glycidyläthern von Bisphenol oder mehrwertigen Alkoholen (vgl. DE—A 25 54 080).

Die Polyepoxidverbindungen werden mit Ammoniak in solchen Mengenverhältnissen zur Reaktion gebracht, daß auf jede Epoxidgruppe 1,75 bis 10 Mole Ammoniak kommen. Besonders bevorzugt ist der Bereich von 1,75 bis 5 Mol Ammoniak pro Mol Epoxidgruppe, wenn die Herstellung von Epoxid-Ammoniak-Addukten beabsichtigt ist, die ohne weitere das Molekulargewicht wesentlich verändernde Maßnahmen als Bindemittel für die kathodische Elektrotauchlackierung eingesetzt werden sollen.

Die Molekulargewichte der erfindungsgemäß zu verwendenden Polyadditionsprodukte liegen im allgemeinen im Bereich zwischen 500 und 5000, entsprechend Aminzahlen zwischen 30 und 275 mg KOH/g Feststoff.

Wird ein hoher bzw. mäßiger Überschuß an Ammoniak bei der Herstellung der erfindungsgemäß zu verwendenden Polyadditionsprodukte angewandt, so werden Produkte erhalten, die ausschließlich primäre bzw. primäre und sekundäre Aminogruppen aufweisen und deren Strukturen sich durch die allgemeine Formel (I) formal beschreiben lassen, wobei $n^3 = 0$ ist.

Ersetzt man bei der Reaktion zur Herstellung der erfindungsgemäß zu verwendenden Polyadditionsprodukte $E^1$ anteilig durch Tri- oder Tetra-Epoxide, so werden entsprechend verzweigte Produkte erhalten (vgl. $E^2$ der allgemeinen Formel (II).

Über tertiären Stickstoff verzweigte Produkte können bei fortschreitend reduzierten eingesetzten Ammoniakmengen erhalten werden. Ihre Struktur läßt sich durch die allgemeine Formel (I) darstellen.

Die unter (I) genannten Produkte hoher Aminzahl sind besonders bevorzugt geeignet in modifizierter oder unmodifizierter und protonierter Form · als Basisbindemittel in Kombination mit den üblichen Vernetzungsmitteln, wie Aminformaldehyd-Kondensationsprodukten, Methylolphenoläthern und geblockten Polyisocyanaten, gegebenenfalls unter Mitverwendung von Produkten zur äußeren Weichmachung, als Bindemittel für die kathodische Elektrotauchlackierung eingesetzt zu werden.

Die Umsetzung von Ammoniak mit den Epoxidverbindungen wird im allgemeinen bei 20 bis 100, vorzugsweise 50 bis 80°C in drucksicheren Reaktoren unter Drucken von z.B. 3 bis 20 bar durchgeführt. Zweckmäßigerweise führt man die Reaktion in Gegenwart von Lösungsmitteln, wie Alkoholen, Ketonen, Glykoläthern oder auch höhersiedende Lösungsmittel dieser Art, die nach Ende der Reaktion nicht entfernt zu werden brauchen, durch.

Sollen Lösungsmittel vollständig entfernt werden, so werden diese besonders gegen Ende der Destillation mit den Ammoniakresten unter vermindertem Druck beseitigt.

Die Molekulargewichtseinstellung bei der Reaktion Ammoniak/Epoxidverbindungen hängt neben dem Ammoniak/Epoxidgruppen-Verhältnis auch noch vom Grad der Verdünnung ab, bei der die Reaktion durchgeführt wird; mit zunehmender Verdünnung werden produkte mit niedrigen Molekulargewichten erhalten.

Eine weitere Verfahrensvariante besteht darin, einen Teil der Diepoxide durch drei bis vier Epoxidgruppen enthaltende Verbindungen zu ersetzen, wobei die Tri- oder Tetraepoxide im Ammoniak enthaltenden Lösungsmittel vorgelegt und das Diepoxid anschließend zudosiert wird.

Außerdem lassen sich die erfindungsgemäß zu verwendenden Polyadditionsprodukte mit Monoepoxid, wie Äthylenoxid, Propylenoxid, Glycid vollständig oder teilweise umsetzen, wobei anschließend — nach vollständiger Umsetzung — quaterniert werden kann. Die Quaternierung kann nach üblichen Methoden, z.B. mit Alkylhalogeniden, Dialkylsulfaten oder mit Monoepoxiden in Gegenwart von Säuren durchgeführt werden.

Als besondere Modifizierungsmöglichkeiten der Epoxid-Ammoniak-Addukte ist die amidgruppenbildende Reaktion mit gesättigten oder äthylenisch ungesättigten Carbonsäuren mit 6 bis 24 Kohlenstoffatomen bzw. besonders einfach, mit Carbonsäureestern zu den entsprechenden Carbonsäureamiden zu nennen. Besonders bevorzugt sind für diese Reaktion Epoxid-Ammoniak-Addukte mit vergleichsweise hohen Aminzahlen, d.h. Produkten die aus Poly- bzw. (Di)epoxidharzen mit höheren Epoxidwerten hergestellt worden sind.

Diese Modifizierungsmöglichkeit stellt eine Methode zur inneren Weichmachung der daraus hergestellten Bindemittel dar und wird deshalb im allgemeinen nur bei den auf Basis von Di- oder Poly-Phenolen hergestellten Epoxid/Ammoniak-Addukten angewendet.

Dimere Fettsäuren können dann eingesetzt werden, wenn diese modifizierende Reaktionen unter quasi Molekulargewichtsverdoppelung durchgeführt werden soll.

Eine weitere besondere Modifizierungsmöglichkeit besteht in der Umsetzung mit Glycidyläthern gesättigter oder ungesättigter Alkylgruppen enthaltender Alkylphenole mit 6 bis 18 C-Atomen in der Alkylkette, wie z.B. Nonylphenol oder Cardanol, welches im wesentlichen als 3-(8,11)Pentadecadienyl-phenol beschrieben werden kann, oder Monoglycidylestern von gesättigten oder ungesättigten, gegebenenfalls verzweigten Carbonsäuren mit 6 bis 24 C-Atomen.

Die modifizierenden Maßnahmen können selbstverständlich miteinander kombiniert werden; z.B. können die erfindungsgemäß zu verwendenden Polyadditionsprodukte mit Fettsäuren, Fettsäureestern und langkettigen Monoepoxiden umgesetzt werden, um anschließend mit einem niedermolekularen Alkylenoxid weiterzureagieren.

Die erfindungsgemäß zu verwendenden Polyadditionsprodukte können auch mehreren der oben genannten Modifizierungsreaktionen nacheinander unterworfen werden, sofern deren Überschaubarkeit gewährleistet und deren Reihenfolge chemisch sinnvoll ist.

Wenn man die erfindungsgemäßen, gegebenenfalls abgewandelten Polyadditionsprodukte in ihrer protonierten Form als Bindemittel für die kathodische Elektrotauchlackierung verwendet, so können sie vorteilhaft mit 2 bis 40 Gew.% der üblichen Vernetzungsmittel, wie Amin/Formaldehyd-Kondensationsprodukten, z.B. Melamin-, Benzoguanamin-, Harnstoff-Formaldehyd-Harzen, wie methylolierten Acetylendiharnstoffderivaten, Phenolharzen und Methylolphenoläthern kombiniert werden.

Bei Mitverwendung der vorgenannten Amino- oder Phenoplastharze können diese auch nach Abmischung mit den erfindungsgemäßen Polyadditionsprodukten einer Vorkondensation mit diesen unterzogen werden.

Die mit den erfindungsgemäß zu verwendenden Polyadditionsprodukten hergestellten Bindemittel können mit üblichen Lacklösungsmitteln, wie Alkoholen von einer Kettenlänge $C_3$ bis $C_{16}$ z.B. Isopropanol, Dekanol, n-, und iso-Butanol, Alkylaromaten z.B. Toluol und Cycloaliphaten sowie mit (oligomeren) Glykolen und Glykoläthern oder wäßrigen organischen Lösungsmittelgemischen verdünnt, gegebenenfalls zusammen mit Pigmenten, Füllstoffen und üblichen Hilfsmitteln eingesetzt werden.

Die mit erfindungsgemäß zu verwendenden Polyadditionsprodukten hergestellten Lackbindemittel werden mit Säuren, wie z.B. Phosphorsäure und ihren Derivaten, vorzugsweise mit wasserlöslichen Carbonsäuren, wie z.B. Essigsäure, Ameisensäure, Milchsäure, protoniert angewandt.

Die protonierten Lackbindemittel werden für die kathodische Elektrotauchlackierung elektrisch leitender Flächen, z.B. von Metallteilen, Blechen usw. aus Messing, Kupfer, Aluminium, Eisen und Stahl, die gegebenenfalls chemisch vorbehandelt, z.B. phosphatiert sind, verwendet.

Die wäßrigen Lösungen oder Dispersionen der zumindest teilweise als Salz einer wasserlöslichen Carbonsäure vorliegenden Lackbindemittel können auch im Gemisch mit diesen durch Kataphorese elektrochemisch abscheidbare Hilfsstoffe enthalten, wie Pigmente, lösliche Farbstoffe, Lösungsmittel,

Verlaufsverbesserer, Stabilisatoren, übliche Härtungskatalysatoren, z.B. Schwermetallverbindungen, Antischaummittel sowie andere Hilfs- und Zusatzstoffe.

Die erfindungsgemäß zu verwendenden Lackbindemittel können sowohl als Hauptträgerharz für die elektrische Abscheidung als auch als Anreibeharz der Pigmentpaste oder auch in Kombination mit einer üblichen Pigmentpaste (z.B. nach DE—OS 2 606 831) verwendet werden.

Zur kathodischen Elektrotauchlackierung wird im allgemeinen durch Verdünnen mit entionisiertem Wasser ein Feststoffgehalt des Elektrotauchbades von 5 bis 30 Gew.% eingestellt. Die Abscheidung erfolgt im allgemeinen bei Temperaturen von 15 bis 40°C während einer Zeit von 1 bis 2 Minuten und bei Bad-pH-Werten von 5,0 bis 8,5, vorzugsweise pH 6,0 bis 8,0, bei Abscheidungsspannungen zwischen 50 und 500 Volt.

Nach dem Abspülen von noch anhaftendem Badmaterial wird der auf dem elektrisch leitenden Körper kathodisch abgeschiedene Film bei etwa 160 bis 220°C 10 bis 30 Minuten, vorzugsweise bei 170 bis 180°C 20 Minuten gehärtet.

Die erfindungsgemäßen Überzugsmittel ergeben bei der kathodischen Abscheidung Überzüge mit hervorragenden mechanischen Eigenschaften, wie große Härte und Kratzfestigkeit, bei sehr guter Elastizität und fester Haftung auf dem Substrat.

Weiterhin zeichnen sich die damit erhaltenen Überzüge durch hohe Lösungsmittelbeständigkeit und Korrosionsbeständigkeit, z.B. im Salzsprühtest, aus.

Die in den Beispielen genannten Teile und Prozente sind, soweit nicht anders angegeben, Gewichtsteile bzw. Gewichtsprozente.

Beispiel 1

Epoxid/Ammoniak-Addukte

a) Verhältnis: 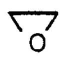 : $NH_3 = 1:4$

In einem drucksicheren Kessel werden 813,0 Teile Methanol und 184,0 Teile Ammoniak vorgelegt. Über eine Dosierpumpe werden in 45 Minuten bei 60°C 902 Teile einer 60%igen Lösung eines Diglycidyläthers aus Bisphenol A und Epichlorhydrin mit einem Epoxidwert von 0,5 in Toluol zugepumpt. zur Nachreaktion wird weitere 4 Stunden bei 70°C erhitzt. Der maximale Druck während der Reaktion beträgt 8 bar. Anschließend wird das Lösungsmittel nebst überschüssigem $NH_3$ durch Destillation entfernt. Zuletzt bei 150°C und 30 Torr. Die Untersuchung des klaren, hellen Harzes ergab ein mittleres Molekulargewicht von 2300 und einen Erweichungspunkt auf der Koflerbank von 86°C.

Der Gesamtstickstoff beträgt 4,8%. Davon entfallen 2,9% auf primäre, 1,7% auf sekundäre und 0,2% auf tertiäre Aminogruppen.

b) Verhältnis: 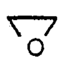 : $NH_3 = 1:3$

Wird die Reaktion wie unter a) beschrieben mit 138,0 Teilen Ammoniak durch geführt, wird ein Produkt mit folgenden Daten erhalten.

Mittleres Molekulargewicht: 2450; Erweichungspunkt 89°C (gemessen auf der Koflerbank). Der Gesamtstickstoff beträgt 4,8%, davon entfallen 2,6% auf primäre- 1,9% auf sekundäre- und 0,3% auf tertiäre-Aminogruppen:

c) Verhältnis: 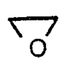 : $NH_3 = 1:2$

Wird die Reaktion wie unter a) beschrieben mit 92,0 Teilen Ammoniak durchgeführt, wird ein Produkt mit folgenden Daten erhalten.

Mittleres Molekulargewicht: 2900; Erweichungspunkt 100°C Der Gesamtstickstoff beträgt 4,2%. Davon entfallen 1,6% auf primäre-, 2,1% auf sekundäre- und 0,5% auf tertiäre-Aminogruppen.

Beispiel 2

Epoxid-Ammoniak-Addukte

a) Verhältnis: 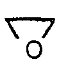 : $NH_3 = 1:2,5$

In einem drucksicheren Kessel werden 450,0 Teile Methanol und 98 Teile Ammoniak vorgelegt.

Über eine Dosierpumpe werden in 45 Minuten bei 60°C eine Mischung aus 933,0 Teilen einer 60%igen toluolischen Lösung eines Diglycidyläthers aus Bisphenol A und Epichlorhydrin mit einem Epoxidwert von 0,2 und 400 Teilen einer 60%igen toluolischen Lösung eines ebenso aufgebauten Diglycidyläthers mit einem Epoxidwert von 0,5 innerhalb von 1,5 Stunden zugepumpt. Die Nachreaktion dauert 4 Stunden bei 70°C. Der Höchstdruck während der Reaktion beträgt 7 bar. Nach der Entfernung

der Lösungsmittel und des überschüßigen Ammoniaks, zuletzt bei 150°C und ca. 30 Torr erhält man ein klares, hellfarbiges Festharz mit folgenden Daten.

Mittleres Molekulargewicht: 2680; Erweichungspunkt 122°C Der Gesamtstickstoff beträgt 2,7%. Davon entfallen 1,2% auf primäre-, 1,2% auf sekundäre- und 0,3% auf tertiäre-Aminogruppen.

b) Verhältnis: 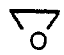 : $NH_3 = 1:2,5$

Werden wie unter a) beschrieben, zuerst 993,0 Teile und anschließend 400,0 Teile der beiden Diglycidylätherlösungen gepumpt, so wird ein Harz mit folgenden Daten erhalten.

Mittleres Molekulargewicht: 3150; Erweichungspunkt 114°C Der Gesamtstickstoff beträgt 2,7%. Davon entfallen 1,3% auf primäre-, 1,2% auf sekundäre- und 0,2% auf tertiäre Aminogruppen.

Beispiel 3

Abwandlung eines Epoxid-Ammoniak-Adduktes:

200,0 Teile des unter Beispiel 1c beschriebenen Epoxid/Ammoniak-Adduktes werden mit 35,5 Teilen Butylglykol versetzt und unter Stickstoff auf 115°C erhitzt. Zu der Schmelze werden innerhalb 30 Minuten 44,0 Teile des Glycidyläthers, hergestellt aus Cardanol und Epichlorhydrin (Epoxidwert: 0,159) (= Diluent C der Fa. Beck of India) zugetropft. Anschließend hält man die Temperatur bei etwa 120°C bis der Ansatz eine konstante Viskosität erreicht hat (ca. 1 Stunde 40 Minuten). Die Aminzahl beträgt 82 mg KOH/g des Bindemittels.

Beispiel 4

300,0 Teile des nach Beispiel 1c erhaltenen Epoxid/Ammoniak-Adduktes werden mit 40,0 Teilen Butylglykol auf 155 bis 160°C aufgeheizt. Unter $N_2$ werden in 1,5 Stunden 63,0 Teile Leinöl zugetropft. Nach etwa 3 Stunden Reaktion bei 160°C wird die Anfangs trübe Mischung klar. Die Reaktion ist beendet wenn Viskositätskonstanz erreicht wird, was nach etwa weiteren 3 Stunden der Fall ist. Die Aminzahl beträgt 73,5 mg KOH/g des Ansatzes.

In einer Apparatur mit gut wirkenden Rührer wird der Ansatz mit Isopropanol auf 70% Festgehalt verdünnt. Bei 70°C werden innerhalb von 45 Minuten 35,0 Teile Propylenoxid zugetropft. Die Reaktion ist beendet, wenn der schwache Rückfluß zum Stillstand gekommen ist.

Beispiel 5

Elektrotauchlackierung:

a) 80 Teile des unter Beispiel 3 genannten Bindemittels werden bei 50°C mit 42,5 Teilen eines reaktiven Melaminharzes (®Luwipal 012 der Fa. BASF AG, Feststoffgehalt 59%), 5,0 Teilen ®Disflamoll DPK der Fa. Bayer AG, 5,0 Teilen eines Monoalkohols mit der Alkylkettenlänge C = 13 und 10,0 Teilen Isopropanol gemischt, mit 3,5 Teilen Essigsäure protoniert und langsam unter gutem Rühren mit vollentsalztem Wasser auf einen Festgehalt von 10% verdünnt. Der pH-Wert beträgt 6,3: der Leitwert $1,35.10^{-3}$ $s.cm^{-1}$. Bei 100 V/2 Minuten und 25°C werden zinkphosphatierte Stahlbleche beschichtet.

Nach dem Einbrennen 20 Minuten bei 180°C werden glatte ca. 15 $\mu m$ starke Beschichtung erhalten. Die Korrosionsprüfung nach DIN 50 021 ergibt nach 10 Tagen Prüfdauer, unabhängig davon wie oft die Prüfbleche mit Chromsäure oder Wasser nachbehandelt werden, Werte von 0,5 bis 1,5 mm, vom Schnitt an gemessen.

b) 87,0 Teile des unter a) eingesetzten Bindemittels werden bei 50°C mit 10,0 Teilen eines Monoalkohols mit einer Alkylkettenlänge C = 13 und 1,0 Teilen Dibutylzinndilaurat gemischt und mit 3,9 Teilen Essigsäure protoniert, anschließend werden 49,0 Teile eines Cyclohexanol-vollgeblockten Polyisocyanates auf der Basis eines Umsetzungsproduktes Trimethylolpropan und Toluylendiisocyanates 80/20 mit einem Festgehalt von 75% in Toluol zugefügt. Anschließend wird mit vollentsalztem Wasser auf einen Feststoffgehalt von 10% verdünnt.

Der pH-Wert beträgt 6,1; der Leitwert $1,3.10^{-3}$ $s.cm^{-1}$. Bei der kathodischen Abscheidung wie bei der Korrosions-prüfung werden unter den bedingungen von a) vergleichbare Ergebnisse beobachtet.

Beispiel 6

300,0 Teile des nach Beispiel 1c erhaltenen Epoxid/Ammoniak-Adduktes werden mit 40,0 Teilen Butylglykol auf 155 bis 160°C aufgeheizt. Unter $N_2$ werden in 1,5 Stunden 63,0 Teile Leinöl zugetropft. Nach etwa 3 Stunden Reaktion bei 160°C wird die Anfangs trübe Mischung klar. Die Reaktion ist beendet wenn Viskositätskonstanz erreicht wird, was nach etwa weiteren 3 Stunden der Fall ist. Die Aminzahl beträgt 73,5 mg KOH/g des Ansatzes.

Elektrotauchlackierung:

77,5 Teile des Bindemittels werden bei 50 bis 60°C mit 10,0 Teilen Isopropanol, 5,0 Teilen Disflamoll DPK der Fa. Bayer AG und 42,5 Teilen eines Melaminharzes wie Luwipal 012 (59%ig) der Fa.

BASF AG homogenisiert, mit 3,0 Teilen Essigsäure protoniert und mit Wasser langsam auf ein Volumen von einem Liter verdünnt. Der Festgehalt beträgt 10%.

Der pH-Wert beträgt 5,7; der Leitwert $1{,}2.10^{-3}$ $s.cm^{-1}$.

Zur kathodischen Abscheidung werden Beschichtungen bei 350 Volt/2 Minuten (25°C) vorgenommen. Nach dem Einbrennen (20 Minuten/180°C) werden glatte Beschichtungen mit einer Schichtstärke von 11 bis 13 μm erhalten. Die Korrosionsprüfung nach DIN 50 021 ergibt nach 10 Tagen Prüfdauer auf mit Eisenphosphat beschichteten und wassergespülten Stahlblechen Werte von 1,5 bis 3,0 mm, vom Schnitt gemessen.

## Patentansprüche

1. Verwendung von mit einer Säure zumindest teilweise protonierten, epoxidgruppenfreien Reaktionsprodukten aus Ammoniak und Di-, Tri- und/oder Tetraepoxidverbindungen, wobei zur Herstellung dieser Reaktionsprodukte jeweils auf eine Epoxidgruppe 1,75 bis 10 Mole Ammoniak eingesetzt und jeweils 1 Mol Ammoniak mit 1,2 bis 2,0 Äquivalenten Epoxid umgesetzt worden ist, so daß bei Verwendung von Diepoxidverbindungen Produkte der Allgemeinen Formel (I)

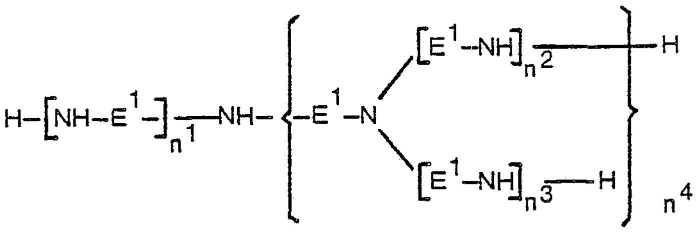
(I)

und bei (Mit-)verwendung von Tri- und/oder Tetraepoxidverbindungen solche der allgemeinen Formel II

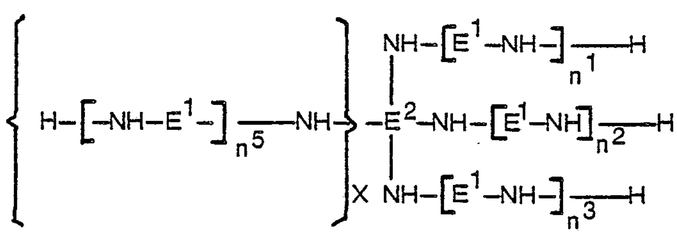
(II)

entstehen, worin $E^1$ gleiche oder verschiedene hydroxylgruppenhaltige zweiwertige und $E^2$ gleiche oder verschiedene hydroxylgruppenhaltige drei- oder vierwertige Reste sind, wie sie durch Ringöffnung der Oxiranringe von Epoxidverbindungen mit zwei, drei oder vier Epoxidgruppen im Molekül erhältlich sind, und $n^1$, $n^3$ und $n^5$ für 0 bis 3, $n^2$ und $n^4$ für 1 bis 3 und X für 0 oder 1 stehen, wobei gegebenenfalls ein oder mehrere der zweiwertigen Reste $E^1$ in der allgemeinen Formel (II) durch mehrwertige Reste $E^2$ ersetzt sein können, für die kathodische Elektrotauchlackierung metallischer Gegenstände.

2. Verwendung von Produkten gemäß Anspruch 1, die durch Umsetzung mit Monoepoxidverbindungen, Carbonsäuren und/oder Carbonsäureestern modifiziert worden sind.

## Claims

1. The use of epoxide-free reaction products which have been derived from ammonia and diepoxides, triepoxides and/or tetraepoxides, and are at least partially protonized with an acid, and in the production of which from 1.75 to 10 moles of ammonia have been employed per epoxide group and 1 mole of ammonia has been reacted with from 1.2 to 2.0 equivalents of epoxide, so that if diepoxide compounds are used products of the general formula (I)

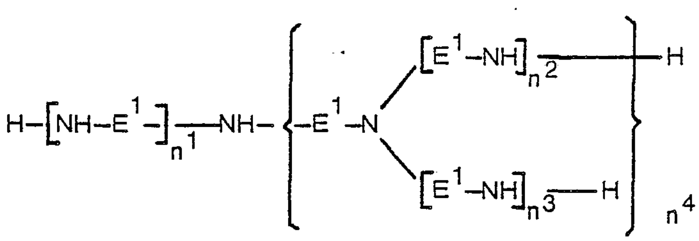
(I)

are obtained, whilst if triepoxide and/or tetraepoxide compounds are used, by themselves, or together with diepoxide compounds, products of the general formula II

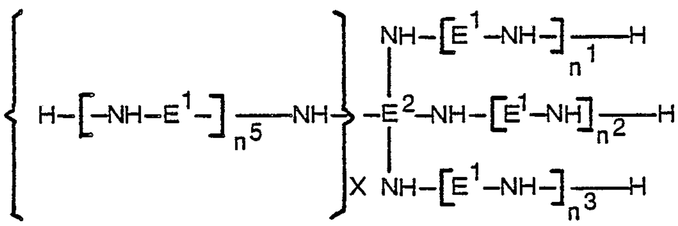

( II )

are produced; in these formulae, the E¹'s are identical or different hydroxyl-containing divalent radicals and the E²'s are identical or different hydroxyl-containing trivalent or tetravalent radicals, resulting from the opening of the oxirane rings of epoxide compounds containing two, three or four epoxide groups in the molecule, $n^1$, $n^3$ and $n^5$ are from 0 to 3, $n^2$ and $n^4$ are from 1 to 3 and X is 0 or 1, and one or more of the divalent radicals $E^1$ in the general formula (II) may or may not be replaced by polyvalent radicals $E^2$, for the cathodic electrocoating of metal articles.

2. The use of products as claimed in claim 1, which products have been modified by reaction with monoepoxide compounds, carboxylic acids and/or carboxylic acid esters.

**Revendications**

1. Utilisation de produits de réaction de dérivés di-, tri- et(ou) tétra-époxydés et d'ammoniac, au moins partiellement protonés par un acide et exempts de groupes époxy terminaux, obtenus par la réaction de 1,75 à 10 moles d'ammoniac par groupe époxy et de 1,2 à 2,0 équivalents époxyde par mole d'ammoniac, conduisant, dans le cas de l'utilisation de composés di-époxydés, à des produits de la formule générale (I)

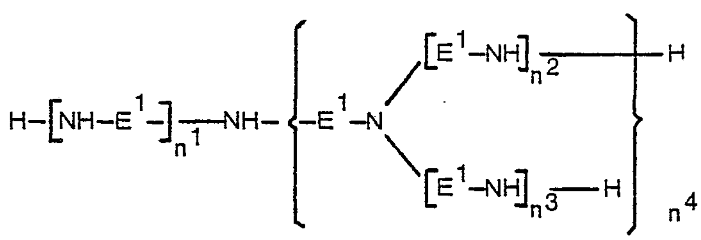

( I )

et dans le cas de l'utilisation (conjointe) de composés tri- et(ou) tétra-époxydés, à des produits de la formule générale (II)

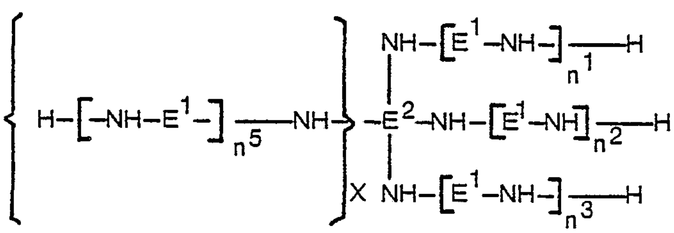

( II )

formules dans lesquelles $E^1$ représente des restes à groupes oxhydryle bivalents identiques ou différents et $E^2$ des restes à groupes oxhydryle tri- ou tétra-valents identiques ou différents, tels qu'obtenus par l'ouverture du noyau oxiranne de composés époxydés avec deux, trois ou quatre groupes époxy dans la molécule, tandis que $n^1$, $n^3$ et $n^5$ valent 0 à 3, $n^2$ et $n^4$ valent 1 à 3 et X vaut 0 ou 1, un ou plusieurs des restes $E^1$ de la formule (I) pouvant éventuellement être remplacés par des restes $E^2$ plurivalents, pour le vernissage par électro-déposition cathodique d'objets métalliques.

2. Utilisation de produits selon la revendication 1, modifiés par réaction avec des composés mono-époxydés, des acides carboxyliques et(ou) des esters d'acides carboxyliques.